# EUROPÄISCHE PATENTSCHRIFT

(11) **EP 2 509 803 B1**
(45) Veröffentlichungstag und Bekanntmachung des Hinweises auf die Patenterteilung: **16.04.2014**
(21) Anmeldenummer: 10765610.0
(22) Anmeldetag: 29.09.2010
(51) Int. Cl.: B60C 11/04, B60C 11/12

(54) **LAUFSTREIFENPROFIL EINES FAHRZEUGLUFTREIFENS**
TREAD PROFILE OF A PNEUMATIC VEHICLE TIRE
PROFIL DE BANDE DE ROULEMENT DE PNEUMATIQUE DE VÉHICULE

(30) Priorität: 09.12.2009 DE 102009044829
(43) Veröffentlichungstag der Anmeldung: 17.10.2012
(73) Patentinhaber: Continental Reifen Deutschland GmbH, 30165 Hannover (DE)
(72) Erfinder: XU, Qiao, 30419 Hannover (DE); BUCHINGER-BARNSTORF, Thomas, 30974 Wennigsen (DE)
(74) Vertreter: Finger, Karsten
(86) Internationale Anmeldenummer: PCT/EP2010/064442
(87) Internationale Veröffentlichungsnummer: WO 2011/069701

(56) Entgegenhaltungen:
- EP-A1- 1 920 951
- EP-A2- 0 917 970
- DE-T2- 60 108 972
- JP-A- 2001 063 323
- JP-A- 2005 001 593

## Beschreibung

Die Erfindung betrifft ein Laufstreifenprofil eines Fahrzeugluftreifens mit durch Rillen oder Nuten axial voneinander beabstandeten und axial begrenzten radial erhabenen Profilbändern, die sich über den gesamten Umfang des Fahrzeugluftreifens erstrecken und in radialer Richtung nach außen von einer die Bodenkontaktoberfläche bildenden Mantelfläche des Fahrzeugluftreifens begrenzt werden, wobei wenigstens in einem Profilband über den Umfang des Fahrzeugluftreifens verteilt eine Vielzahl von quer- oder schrägverlaufenden Einschnitten ausgebildet sind, die sich in axialer Richtung A zumindest innerhalb der Bodenaufstandsbreite TA des Fahrzeugluftreifens jeweils durch das gesamte Profilband hindurch und in radialer Richtung R ausgehend von der Mantelfläche nach radial innen bis in eine Tiefe T erstrecken, wobei die Einschnitte jeweils zumindest erste radiale Erstreckungsbereiche und zweite radiale Erstreckungsbereiche aufweisen, wobei der Einschnitt im ersten radialen Erstreckungsbereich jeweils als Feineinschnitt mit einer Schnittdicke d und einer in radialer Richtung R gemessenen Erstreckungshöhe H₁ und im zweiten radialen Erstreckungsbereich als breiter Einschnitt der Schnittdicke B mit B ≥ (2d) und einer in radialer Richtung R gemessenen Erstreckungshöhe H₂ ausgebildet ist.

Derartige Laufstreifenprofile sind bekannt. Bei den bekannten Laufstreifenprofilen sind Profilblockreihen mit durch Querrillen voneinander beabstandeten Profilblockelementen ausgebildet und die Profilblockelemente sind mit Feineinschnitten versehen, an deren radial inneren Erstreckungsbereich sich Durchgangskanäle anschließen, die den aus Feineinschnitt und Durchgangskanal gebildeten Einschnitt nach radial innen begrenzen. Mit zunehmender Lebensdauer wird aufgrund des Abriebes der Feineinschnitt abgefahren und es öffnet sich dann der Durchgangskanal zur Bildung einer zusätzlichen Querrille. Die Profilblockreihe besteht nun aus einer deutlich erhöhten Zahl von Querrillen bestehend aus den ursprünglichen Querrillen und aus den aus jedem Einschnitt hervorgehenden zusätzlichen Querrillen, wodurch das Profil mit deutlich reduzierter für den Eingriff mit der Straßenoberfläche zur Verfügung stehender Haftungsoberfläche ausgestattet ist. Die am Neureifen durch die dort großen zur Verfügung stehenden Haftungsoberflächen mit Feineinschnitten und Querrillen bedingten guten Griffeigenschaften zum Griff auf Schnee und Nässe werden hierdurch reduziert.

Während beim Neureifen am Profilblockelement bei großer wirkender Kontaktoberfläche zur Straße mit in der Summe großen wirkenden und im Bereich der Feineinschnitte sich gegeneinander abstützende Flächenelementen mit bei Bremsen und Traktion sich im Bereich der Lamellen bildenden zusätzlichen Griffkante und zusätzliche Querrillen zur Ableitung von Wasser und zur Aufnahme von Schnee zur Verfügung stehen, fehlen mit zunehmender Lebensdauer bei abgefahrenen Feineinschnitten die sich stützenden in Summe eine große wirkenden Fläche bildenden Flächenelemente. Durch die insgesamt reduzierte wirkende Kontaktoberfläche und die fehlende gegenseitige Stützwirkung der Flächenelemente wird die mögliche Kraftübertragung bei Traktion und Bremsen auf Schnee und Nässe reduziert.

Bei Ausbildung von Profilblockreihen mit reinen Querrillen und einer Vielzahl von in Umfangsrichtung zwischen den Querrillen ausgebildeten reinen Feineinschnitten, die jeweils bis zum Profilgrund reichen, und die somit mit zunehmender Lebensdauer noch ihre Wirkung aufrechterhalten könnten, können durch die bis in den Profilgrund erstreckten Querrillen und die hierdurch bedingte eingeschränkte Biegesteifigkeit des Profilblockelemente gerade beim Neureifen hohe Kerb-Kräfte am Rillen- und am Feineinschnittsgrund entstehen, wodurch die Haltbarkeit des Reifens begrenzt unerwünscht begrenzt sein kann.

Aus der DE 601 08 972 T2 ist es bekannt, Einschnitte längs ihrer axialen Erstreckung mit unterschiedlicher Breite auszubilden und in den Erstreckungsabschnitten, in denen die Einschnitte in der radial äußeren Oberfläche schmal ausgebildet sind, die Einschnitte in ihrem radial inneren Erstreckungsbereich breit auszubilden und in den Erstreckungsabschnitten, in denen die Einschnitte an der radial äußeren Oberfläche breit ausgebildet sind, diese in ihrem radial inneren Erstreckungsbereich schmal auszubilden.

Der Erfindung liegt daher die Aufgabe zugrunde, ein derartiges Laufstreifenprofil zu schaffen, bei dem in einfacher Weise gute Wintergriffeigenschaften und Profilhaltbarkeit ermöglicht werden.

Erfindungsgemäß wird die Aufgabe durch die Ausbildung eines Laufstreifenprofils eines Fahrzeugluftreifens mit durch Rillen oder Nuten axial voneinander beabstandeten und axial begrenzten radial erhabenen Profilbändern, die sich über den gesamten Umfang des Fahrzeugluftreifens erstrecken und in radialer Richtung nach außen von einer die Bodenkontaktoberfläche bildenden Mantelfläche des Fahrzeugluftreifens begrenzt werden, wobei wenigstens in einem Profilband über den Umfang des Fahrzeugluftreifens verteilt eine Vielzahl von quer- oder schrägverlaufenden Einschnitten ausgebildet sind, die sich in axialer Richtung A zumindest innerhalb der Bodenaufstandsbreite TA des Fahrzeugluftreifens jeweils durch das gesamte Profilband hindurch und in radialer Richtung R ausgehend von der Mantelfläche nach radial innen bis in eine Tiefe T erstrecken, wobei die Einschnitte jeweils zumindest erste radiale Erstreckungsbereiche und zweite radiale Erstreckungsbereiche aufweisen, wobei der Einschnitt im ersten radialen Erstreckungsbereich jeweils als Feineinschnitt mit einer Schnittdicke d und einer in radialer Richtung R gemessenen Erstreckungshöhe H₁ und im zweiten radialen Erstreckungsbereich als breiter Einschnitt der Schnittdicke B mit B ≥ (2d) und einer in radialer Richtung R gemessenen Erstreckungshöhe H₂ ausgebildet ist, gemäß den Merkmalen von Anspruch 1 gelöst, bei dem die innerhalb eines Einschnitts jeweils zueinander ausgebildete radiale Position des ersten radialen Erstreckungsbereichs und des zweiten radialen Erstreckungsbereichs in den über den Umfang des Reifens verteilt angeordneten Einschnitten zumindest teilweise -insbesondere in einer alternierenden Reihenfolge - unterschiedlich gewählt ist.

Bei dieser Ausbildung wird mit zunehmender Lebensdauer an den Einschnitten, an denen in dem radial äußeren Erstreckungsbereich zunächst der Einschnitt als Feineinschnitt ausgebildet ist, nach Abfahren dieses ersten als Feineinschnittsbereich ausgebildeten ersten Erstreckungsbereichs der breitere zweite Erstreckungsbereich geöffnet, welcher dann eine Quer- bzw. Schrägrille bildet, und bei den Einschnitten, die in ihrem radial äußeren Bereich zunächst mit dem breiteren zweiten radialen Erstreckungsbereich ausgebildet sind und die zunächst die Wirkung einer Querrille bzw. Schrägrille ausüben, werden mit zunehmender Lebensdauer nach Abfahren dieses zweiten Erstreckungsbereiches in den durch den ersten Erstreckungsbereich gebildeten Feineinschnitt umgewandelt. Das Profil erhält somit über seine gesamte Lebensdauer immer eine ausreichende Zahl von wasseraufnehmenden und wasserableitenden Querrillen und von Feineinschnitten. Über die gesamte Lebensdauer ermöglichen an der jeweiligen radial äußeren Oberfläche des Profils vorhandene Feineinschnitte, die für die Wintereignung erforderliche Griffwirkung auf Schnee und Nässe und gleichzeitig eine Abstützung der durch die Feineinschnittsbereiche getrennten Profilabschnittsbereiche des Profilbandes, wodurch eine große wirkende steife Griffoberfläche über die gesamte Lebensdauer erhalten bleibt. Die stützende Wirkung der als Feineinschnittsbereiche ausgebildeten ersten Erstreckungsbereiche wirkt der Entstehung hoher Kerbkräfte auch im Neureifen entgegen. Auf diese Weise werden somit gute Wintereigenschaften bei hoher Haltbarkeit ermöglicht.

Besonders vorteilhaft ist die Ausbildung eines Laufstreifenprofils gemäß den Merkmalen von Anspruch 2, wobei die Einschnitte wenigstens zusätzlich dritte radiale Erstreckungsbereiche aufweisen, in denen der Einschnitt ebenfalls als Feineinschnitt mit der Schnittdicke d und mit einer in radialer Richtung R gemessenen Erstreckungshöhe H₃ ausgebildet ist, und wobei die innerhalb eines Einschnitts jeweils zueinander ausgebildete radiale Position des ersten radialen Erstreckungsbereichs, die radiale Position des zweiten radialen Erstreckungsbereichs und die radiale Position des dritten Erstreckungsbereichs in den über den Umfang des Reifens verteilt angeordneten Einschnitten zumindest teilweise - insbesondere in einer alternierenden Reihenfolge - unterschiedlich gewählt ist. Dies ermöglicht eine sehr feine Abstufung und einen besonders hohen Abstützeffekt, sowie eine gute Balance zwischen großer Abstützfläche und wirkender Rillenöffnung.

Besonders vorteilhaft ist die Ausbildung eines Laufstreifenprofils gemäß den Merkmalen von Anspruch 3, wobei die Erstreckungshöhe des dritten radialen Erstreckungsbereiches und die Erstreckungshöhe des ersten radialen Erstreckungsbereiches mit H₃ = H₁ ausgebildet ist. Hierdurch sind in einfacher Weise relativ lange zwischen benachbarten Einschnitten gebildete Teilblöcke zur Steuerung der Umfangssteifigkeit umsetzbar sowie eine ausgewogene Balance aus guter Flexibilität in radialer Richtung und Umfangssteifigkeit.

Besonders vorteilhaft ist die Ausbildung eines Laufstreifenprofils gemäß den Merkmalen von Anspruch 4, wobei die Erstreckungshöhe des dritten radialen Erstreckungsbereiches und die Erstreckungshöhe des ersten radialen Erstreckungsbereiches mit H₃ > H₁ ausgebildet ist. Hierdurch ist in einfacher Weise eine sehr feine Abstimmung mit großer Abstützfläche. Dabei sind auch sehr kurze zwischen benachbarten Einschnitten gebildete Teilblöcke umsetzbar, wodurch eine große radiale Flexibilität des Laufstreifenprofils und eine hohe Anpassung des Laufstreifenprofiles an die Straßenoberfläche ermöglicht werden kann.

Besonders vorteilhaft ist die Ausbildung eines Laufstreifenprofils gemäß den Merkmalen von Anspruch 5, wobei in Umfangsrichtung des Fahrzeugreifens jeweils von Einschnitt zu Einschnitt sich die radiale Position des zweiten radiale Erstreckungsbereiches gegenüber dem vorangegangenen Einschnitt ändert. Hierdurch kann in einfacher Weise eine optimierte Verteilung der wirkenden Querrillen über den Umfang des Reifens über dessen gesamte Lebensdauer ermöglicht werden.

Besonders vorteilhaft ist die Ausbildung eines Laufstreifenprofils gemäß den Merkmalen von Anspruch 6, wobei in einer sich über den Umfang des Fahrzeugluftreifens wiederholenden Abfolge von in Umfangsrichtung hintereinander angeordneten Einschnitten von Einschnitt zu Einschnitt der zweite radiale Erstreckungsbereich in allen radialen Positionen des zweiten Erstreckungsbereiches einmal ausgebildet ist. Dies ermöglicht in einfacher Weise eine weiter optimierte Verteilung der wirkenden Querrillen über den Umfang des Reifens über dessen gesamte Lebensdauer.

Besonders vorteilhaft ist die Ausbildung eines Laufstreifenprofils gemäß den Merkmalen von Anspruch 7, wobei innerhalb der sich über den Umfang des Fahrzeugluftreifens wiederholenden Abfolge von in Umfangsrichtung U hintereinander angeordneten Einschnitten der zweiten Erstreckungsbereich von Einschnitt zu Einschnitt jeweils in die von radial innen nach radial außen nächstgelegene radial äußeren Position des zweiten Erstreckungsbereiches verändert ausgebildet ist. Dies ermöglicht in einfacher Weise eine weiter optimierte Verteilung der wirkenden Querrillen über den Umfang des Reifens über dessen gesamte Lebensdauer. Darüber hinaus kann eine weitgehend gleichbleibende Veränderung der übertragbaren Kräfte und Steifigkeiten über die Lebensdauer ermöglicht werden.

Besonders vorteilhaft ist die Ausbildung eines Laufstreifenprofils gemäß den Merkmalen von Anspruch 8, wobei über den Umfang des Fahrzeugluftreifens die Abfolgen der Einschnitte unmittelbar hintereinander anschließen. Dies ermöglicht in einfacher Weise eine weiter optimierte Verteilung der wirkenden Querrillen über den Umfang des Reifens über dessen gesamte Lebensdauer.

Besonders vorteilhaft ist die Ausbildung eines Laufstreifenprofils gemäß den Merkmalen von Anspruch 9, wobei zwischen zwei in Umfangsrichtung U hintereinander angeordneten derartigen Abfolgen eine zweite Abfolge von Einschnitten angeordnet ist, innerhalb der der zweite radiale Erstreckungsbereich jeweils von Einschnitt zu Einschnitt in die von radial außen nach radial innen nächstgelegene radial innere Position des zweiten Erstreckungsbereiches verändert ausgebildet ist. Dies ermöglicht in einfacher Weise eine weiter optimierte Verteilung der wirkenden Querrillen über den Umfang des Reifens über dessen gesamte Lebensdauer. Mit zunehmender Lebensdauer kann die damit verbundene Profilsteifigkeitserhöhung durch die dann gegenüber dem Neureifen vermehrt wirkenden Querrillen kompensiert werden.

Besonders vorteilhaft ist die Ausbildung eines Laufstreifenprofils gemäß den Merkmalen von Anspruch 10, wobei die zweiten Erstreckungsbereiche mit einer senkrecht zur Erstreckungsrichtung im Wesentlichen ovaler, elliptischer oder rechteckig abgerundeter Querschnittskontur ausgebildet sind. Hierdurch kann bei einfacher Ausführbarkeit der Entstehung von Rissen entgegengewirkt werden, was die Haltbarkeit begünstigt. Besonders vorteilhaft und einfach ausführbar ist die Ausbildung eines Laufstreifenprofils gemäß den Merkmalen von Anspruch 11, wobei die Erstreckungshöhe H₂ des zweiten Erstreckungsbereiches mit B≤ H₂≤(0,5P_{T}) ausgebildet, wobei P_{T} die in der das Profilband in axialer Richtung begrenzenden Rillen in radialer Richtung R ausgehend von der Mantelfläche nach radial innen gemessene maximale Profiltiefe angibt.

Besonders vorteilhaft ist die Ausbildung eines Laufstreifenprofils gemäß den Merkmalen von Anspruch 12, wobei die Schnittdicke d des Feineinschnitts mit 0,4mm ≤ d ≤ 2mm ausgebildet ist. Hierdurch kann in einfacher Weise der Abstützeffekt der durch Feineinschnitt getrennten Profilabschnitte bei Sicherstellung der Feineinschnittswirkung sichergestellt werden.

Besonders vorteilhaft ist die Ausbildung eines Laufstreifenprofils gemäß den Merkmalen von Anspruch 13, wobei jeweils an den Einschnitten, in denen ein erster bzw. ein dritter radialer Erstreckungsbereich des Einschnitts in radialer Position unterhalb des zweiten radialen Erstreckungsbereichs des Einschnitts ausgebildet ist, der Einschnitt an seinem radial inneren Erstreckungsende mit einer kanalförmigen Öffnung -mit insbesondere ovalem oder elliptischem Querschnitt -, die sich längs der Erstreckung des Einschnitts in axialer Richtung A zumindest innerhalb der Bodenaufstandsbreite TA des Fahrzeugluftreifens durch das gesamte Profilband hindurch erstreckt und deren Querschnitt eine in radialer Richtung gemessene Querschnittshöhe H₄ und eine Kanalbreite B₄ aufweist mit B₄ ≤ H₄< (0,5 H₂) und mit d≤ B₄<(0,5B). Hierdurch kann sehr zuverlässig die Kerbwirkung reduziert werden.

Die Erfindung wird im Folgenden an Hand der in den Figuren 1 bis 13 dargestellten Ausführungsbeispiele näher erläutert. Hierin zeigen
- Fig. 1: eine Umfangsrippe eines Fahrzeugluftreifens in Seitenansicht gemäß Schnitt I-I von Fig.2,
- Fig. 2: eine Draufsicht auf die Umfangsrippe von Fig.1 im Neuzustand des Fahrzeugreifens,
- Fig. 3a bis 3d: Schnittdarstellungen der Umfangsrippe gemäß den Schnitten IIIa-IIIa, IIIb-IIIb, IIIc-IIIc bzw. IIId-IIId der Fig.2,
- Fig. 4a bis 4c: Schnittdarstellungen der Umfangsrippe in unterschiedlichen radialen Positionen des Reifens zur Erläuterung der sich ergebenden Draufsicht, sobald das Profil bis zu der dem Schnitt entsprechenden radialen Position abgefahren ist, wobei Fig.4a die Schnittdarstellung gemäß Schnitt IVa-IVa von Fig. 1, Fig.4b, die Schnittdarstellung gemäß Schnitt IVb-IVb von Fig. 1 und Fig.4c die Schnittdarstellung gemäß Schnitt IVc-IVc von Fig. 1 darstellt,
- Fig. 5: eine Umfangsrippe in alternativer Ausbildung in Seitenansicht gemäß Schnitt V-V von Fig.6
- Fig. 6: eine Draufsicht auf die Umfangsrippe von Fig. 5 im Neuzustand des Fahrzeugreifens,
- Fig. 7a bis 7c: Schnittdarstellungen der Umfangsrippe von Fig.5 in unterschiedlichen radialen Positionen, wobei Fig.7a die Schnittdarstellung gemäß Schnitt VIIa-VIIa, Fig.7b die Schnittdarstellung gemäß Schnitt VIIb-VIIb und Fig.7c die Schnittdarstellung gemäß Schnitt VIIc-VIIc von Fig.5 darstellt,
- Figuren 8a bis 8d: Schnittdarstellungen der Umfangsrippe von Fig.5 und Fig.6 in unterschiedlichen Umfangspositionen, wobei Fig.8a den Schnitt VIIIa-VIIIa, Fig.8b die Schnittdarstellung gemäß Schnitt VIIIb-VIIIb, Fig.8c die Schnittdarstellung gemäß Schnitt VIIIc-VIIIc und Fig.8d die Schnittdarstellung gemäß Schnitt VIIId-VIIId von Fig.5 bzw. Fig.6 darstellt,
- Fig.9: eine Umfangsrippe in alternativer Ausführung in Seitenansicht gemäß Schnitt IX-IX von Fig.10
- Fig.10: eine Draufsicht auf die Umfangsrippe von Fig.9 im Neuzustand des Fahrzeugreifens,
- Figuren 11a bis 11 c: Schnittdarstellungen der Umfangsrippe von Fig.10 in unterschiedlichen radialen Positionen, wobei Fig.11a die Schnittdarstellung gemäß Schnitt XIa-XIa, Fig.11b die Schnittdarstellung gemäß Schnitt XIb-XIb und Fig.11c die Schnittdarstellung gemäß Schnitt XIc-XIc von Fig.9 darstellt,
- Figuren 12a bis 12d: Schnittdarstellung der Umfangsrippe von Fig.9 und Fig.10 in unterschiedlichen Umfangspositionen, wobei Fig.12a den Schnitt XIIa-XIIa, Fig.12b den Schnitt XIIb-XIIb, Fig.12c den Schnitt XIIc-XIIc und Fig.12d den Schnitt XIId-XIId von Fig.9 darstellt, und
- Figur 13: eine schematische Darstellung einer alternativen Ausbildung einer Umfangsrippe in Schnittdarstellung entsprechend den Darstellungen von Fig.1, Fig.5 bzw. Fig.9.

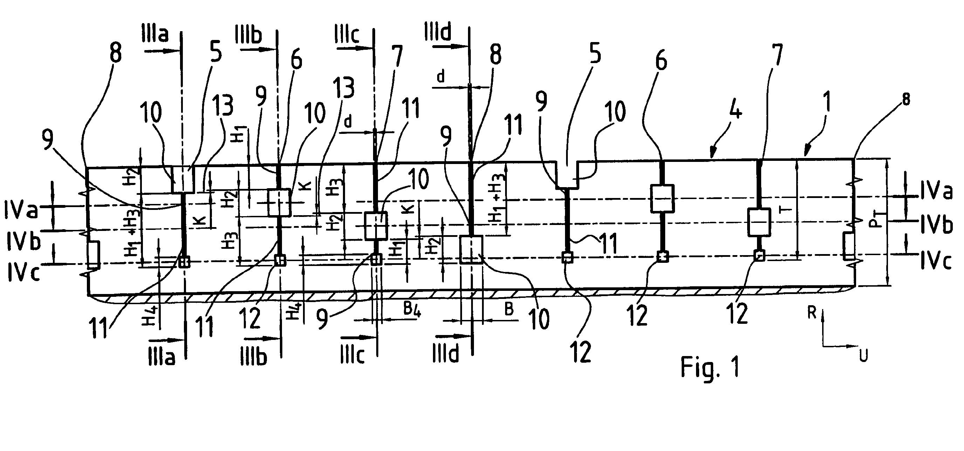

Die Figuren 1, 2, 3a, 3b, 3c und 3d zeigen eine in Umfangsrichtung U eines Fahrzeugluftreifens für Nutzfahrzeuge ausgebildete über den gesamten Umfang des Fahrzeugluftreifens erstreckte und in radialer Richtung R erhabene Umfangsrippe 1, welche in axialer Richtung A des Fahrzeugluftreifens zu beiden Seiten hin jeweils durch eine in Umfangsrichtung U über den gesamten Umfang erstreckte und in Umfangsrichtung U ausgerichtete Umfangsrille 2 bzw. 3 axial begrenzt ist. Die Umfangsrippe 1 erstreckt sich in radialer Richtung R aus dem Rillengrund der Umfangsrillen 2 bzw. 3 nach außen und wird auf seiner nach radial außen weisenden Oberfläche von einer die Bodenkontaktfläche bildenden Mantelfläche 4 begrenzt. Die Umfangsrillen 2 und 3 weisen eine maximale in radialer Richtung ausgehend von der Mantelfläche 4 nach innen mit zum Rillengrund bemessene Tiefe auf, die der Profiltiefe P_{T} entspricht.

In der Profilrippe 1 sind in Umfangsrichtung des Fahrzeugluftreifens verteilt und in Umfangsrichtung U hintereinander angeordnet querverlaufende, d. h. in axialer Richtung A ausgerichtete Einschnitte 5, 6, 7, 8 ausgebildet, die sich in axialer Richtung A durch die gesamte Profilrippe 1 hindurch ausgehend von der Umfangsrille 2 bis zur Umfangsrille 3 und in radialer Richtung R ausgehend von der die Bodenkontaktoberfläche bildenden Mantelfläche 8 nach radial innen bis in eine Tiefe T erstrecken mit T < P_{T}.

Der Einschnitt 6 ist in radialer Richtung R des Reifens von radial außen nach radial innen aus einem ersten radialen Erstreckungsbereich 9 mit in radialer Richtung gemessener Erstreckungshöhe H₁, aus einem sich in radialer Richtung nach innen anschließenden zweiten radialen Erstreckungsbereich 10 der in radialer Richtung gemessenen Erstreckungshöhe H₂ und aus einem sich in radialer Richtung nach innen anschließenden radial inneren Erstreckungsbereich 11 der in radialer Richtung gemessenen Erstreckungshöhe H₃ ausgebildet. Der erste Erstreckungsbereich 9 ist als Feineinschnitt mit einer senkrecht zur Haupterstreckungsrichtung des Feineinschnitts in jeder radialen Position des Feineinschnitts gemessenen Schnittdicke d ausgebildet. Der dritte Erstreckungsbereich 11 ist ebenfalls als ein Feineinschnitt mit der Schnittdicke d ausgebildet. Der zweite radiale Erstreckungsbereich 10 ist als in axialer Richtung A des Fahrzeugreifens erstreckter Durchflusskanal 10, mit einer senkrecht zur Erstreckungsrichtung des Durchflusskanals und zur radialen Richtung R gemessenen Breite B ausgebildet mit B ≥ (2d). Die radiale Erstreckungshöhe H₃ ist größer als die radiale Erstreckungshöhe H₁ gewählt.

Die radialen Erstreckungshöhen H₂ und H₃ sind mit B ≤ H₂ ≤ H₃ ≤ (0,5P_{T}) ausgebildet. In den dargestellten Ausführungsbeispielen ist B < H₂ gewählt.
Beispielsweise ist H₁ = H₂ = (0,5 H₃) gewählt.

Die Einschnitte 5, 7 und 8 sind in gleicher Weise ausgebildet wie der Einschnitt 6, wobei in den Einschnitten 5,7 und 8 jeweils die in radialer Richtung ausgebildete Reihenfolge der radialen Erstreckungsbereiche 9, 10 und 11 anders gewählt ist.

Beim Einschnitt 7 bildet der dritte radiale Erstreckungsbereich 11 den radial äußeren Erstreckungsabschnitt des Einschnitts 7. In radialer Richtung nach innen schließt sich an den dritten radialen Erstreckungsbereich 11 der zweite radiale Erstreckungsabschnitt 10 an. An den zweiten radialen Erstreckungsabschnitt 10 schließt sich in radialer Richtung R nach innen der erste radiale Erstreckungsabschnitt 9 an.

Beim Einschnitt 8 bildet der dritte radiale Erstreckungsbereich 11 den radial äußeren Erstreckungsabschnitt des Einschnitts 8. In radialer Richtung nach innen schließt sich an den dritten radialen Erstreckungsbereich 11 der erste radiale Erstreckungsabschnitt 9 an. An den ersten radialen Erstreckungsabschnitt 9 schließt sich in radialer Richtung R nach innen der zweite radiale Erstreckungsabschnitt 10 an.

Beim Einschnitt 5 bildet der zweite radiale Erstreckungsbereich 10 den radial äußeren Erstreckungsabschnitt des Einschnitts 5. In radialer Richtung nach innen schließt sich an den zweiten radialen Erstreckungsbereich 10 der erste radiale Erstreckungsabschnitt 9 an. An den ersten radialen Erstreckungsabschnitt 9 schließt sich in radialer Richtung R nach innen der dritte radiale Erstreckungsabschnitt 10 an.

In Umfangsrichtung U des Fahrzeugluftreifens gesehen ist jeweils hinter einem Einschnitt 5 ein Einschnitt 6, hinter dem Einschnitt 6 ein Einschnitt 7 und hinter dem Einschnitt 7 ein Einschnitt 8 ausgebildet. Diese Folge der Anordnung von Einschnitten 5 ,6 ,7 und 8 wiederholt sich in Umfangsrichtung des Reifens, so dass direkt in Umfangsrichtung U hinter dem Einschnitt 8 einer ersten Folge eine neue Folge von Einschnitten 5, 6, 7 und 8 wieder beginnend mit dem Einschnitt 5 angeordnet ist. Somit wiederholt sich über den gesamten Umfang des Fahrzeugluftreifens eine Abfolge von in Umfangsrichtung hintereinander angeordneten Einschnitten 5,6,7 und 8, wobei von einem Einschnitt zum nächsten Einschnitt der zweite radiale Erstreckungsbereich 10 in jeder Folge einmal in allen vier radialen Positionen des zweiten Erstreckungsbereiches einmal ausgebildet ist und wobei jeweils der zweite radiale Erstreckungsbereich 10 ausgehend von dem ersten in der Abfolge befindlichen Einschnitt 5, in dem der zweite radiale Erstreckungsbereich die radial äußerste Position einnimmt über den nachfolgenden Einschnitt 6, den darauf folgenden Einschnitt 7 bis zum letzten Einschnitt 8 der Folge jeweils in seiner radialen Position in die nächstgelegene radial innere Position abgesenkt angeordnet ist. Ebenso ist in die entgegengesetzte Orientierung der Umfangsrichtung U betrachtet innerhalb einer folge ausgehend vom Einschnitt 8 über den Einschnitt 7, den Einschnitt 6 bis zum Einschnitt 5 der zweite radiale Erstreckungsabschnitt 10 jeweils von einem zum nächsten Einschnitt in seiner radialen Position in die nächstgelegene weiter radial außen gelegene Position angehoben angeordnet.

Der Durchflusskanal 10 ist in in einer Ausführung in seinem Querschnitt im wesentlichen rechteckig mit abgerundeten Ecken ausgebildet mit in radialer Richtung des Fahrzeugluftreifens gemessener Erstreckungshöhe H₂ und mit senkrecht zur Haupterstreckungsrichtung des Durchflusskanals und zur radialen Richtung R gemessener Breite B.

Der Durchflusskanal 10 ist in anderer Ausführung in seinem Querschnitt oval oder elliptisch ausgebildet mit in radialer Richtung des Fahrzeugluftreifens gemessener Erstreckungshöhe H₂ und mit senkrecht zur Haupterstreckungsrichtung des Durchflusskanals und zur radialen Richtung R gemessener Breite B.

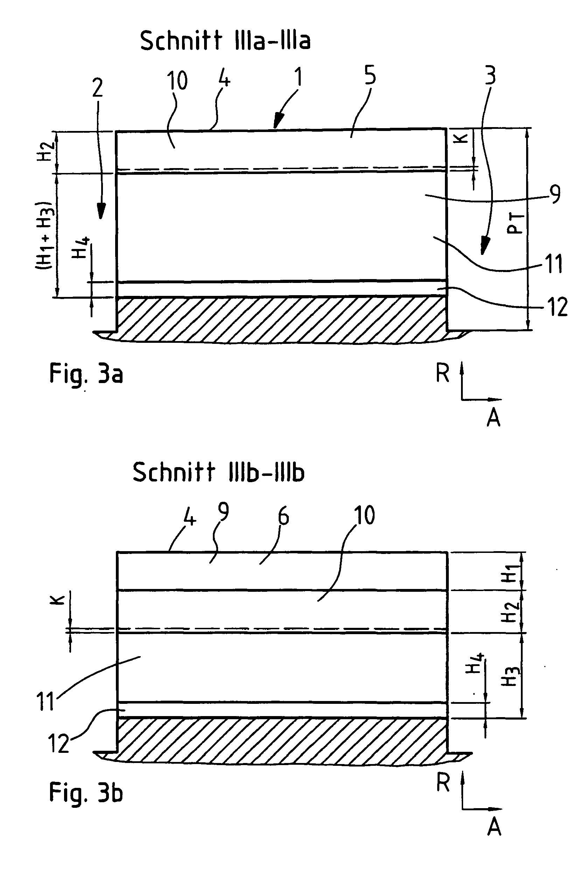

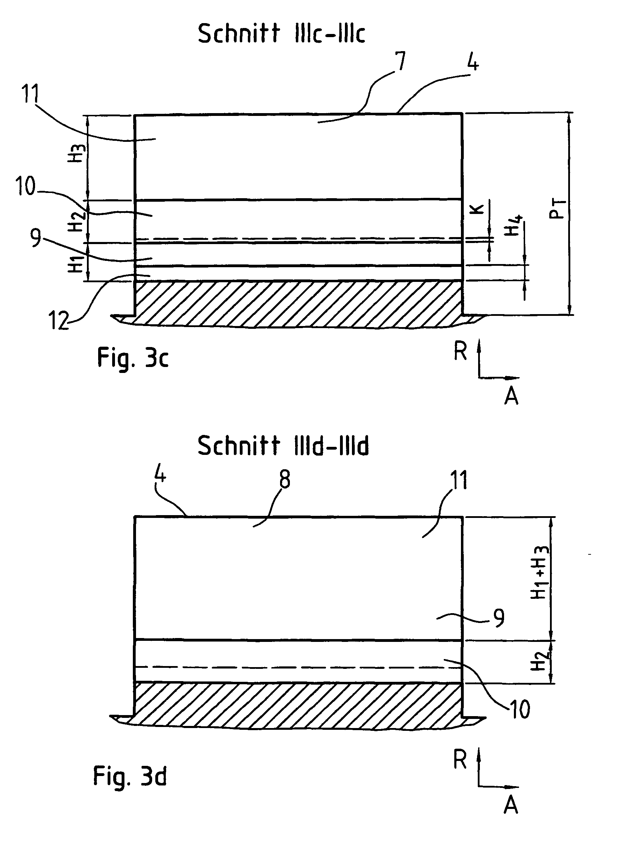

In einer weiteren Ausführung mit (H₁ + H₂) > H₃ mit H₃ > H₂ und mit H₃ > H₁ ist - wie in Figur 1 und in den Figuren 3a bis 3d zu erkennen ist - der zweite radiale Erstreckungsabschnitt 10 des Einschnitts 6 gegenüber dem zweiten Erstreckungsabschnitt 10 des vorgeordneten Einschnitts 5 um ein kleines radiales Erstreckungsmaß K überlappt ausgebildet mit K < (1/5)H₂. Ebenso ist zwischen dem zweiten radialen Erstreckungsabschnitt 10 des Einschnitts 7 und dem zweiten Erstreckungsabschnitts 10 des in Umfangsrichtung U vorgeordneten Einschnitts 6 ein radialer Überlappungsabschnitt der radialen Erstreckungslänge K ausgebildet. Ebenso ist zwischen dem zweiten radialen Erstreckungsabschnitt 10 des Einschnitts 8 und dem zweiten radialen Erstreckungsabschnitt 10 des diesem vorgeordneten Einschnitts 7 ein radialer Überlappungsabschnitt der radialen Erstreckungslänge K ausgebildet.

Die Figuren 1, 2, 3a bis 3d und 4a bis 4c zeigen darüber hinaus ein weiteres Ausführungsbeispiel, bei welchem in den drei Einschnitte 5, 6 und 7, in denen radial unterhalb des zweiten radialen Erstreckungsabschnitt 10 jeweils ein erster und/oder ein dritter radialer Erstreckungsabschnitt 9 bzw. 11 ausgebildet ist, jeweils am radialen inneren Erstreckungsende des jeweiligen Einschnitts 5, 6 bzw. 7 ein kleiner Abschlusskanal 12 ausgebildet ist, der sich längs des jeweiligen Einschnitts 5, 6 bzw. 7 in axialer Richtung durch die Profilrippe 1 hindurch erstreckt. Der Abschlusskanal 12 weist einen ovalen oder elliptischen Querschnitt auf und ist mit einer von seinem im radialen Abstand (H₁ + H₂ + H₃) von der Mantelfläche 4 ausgebildeten nach radial innen den des zugehörigen Einschnitts 5, 6 bzw. 7 begrenzenden Grund aus mit einer nach radial außen erstreckten Höhe H₄ und mit einer quer zur Erstreckungsrichtung und zur Radialen R gemessenen maximalen Breite B₄ ausgebildet mit B₄ ≤ H₄ < (0,5 H₂) und mit d ≤ B₄ < (0,5B).

Im dargestellten Ausführungsbeispiel ist d =1mm, H₄ =3mm, B₄ =2mm, H₂ =7mm, B = 4mm gewählt.

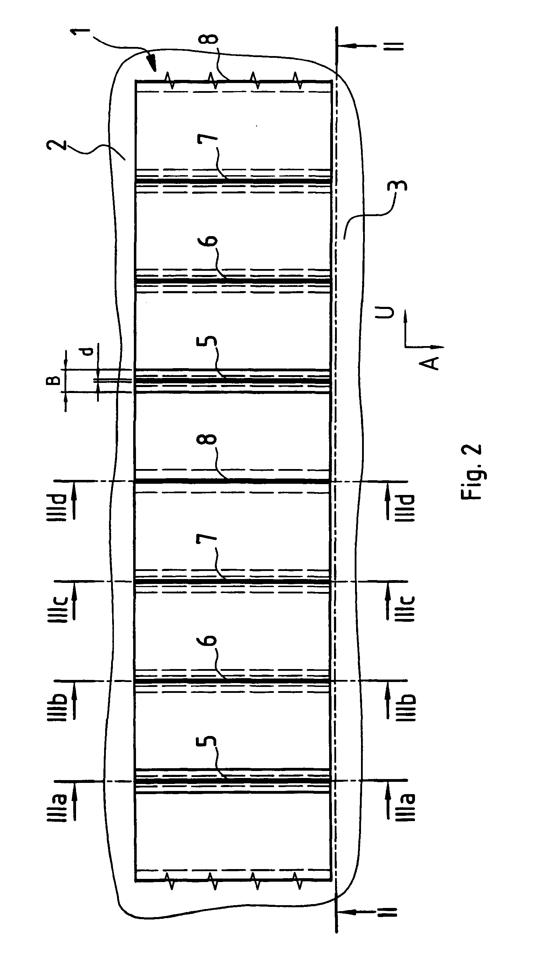

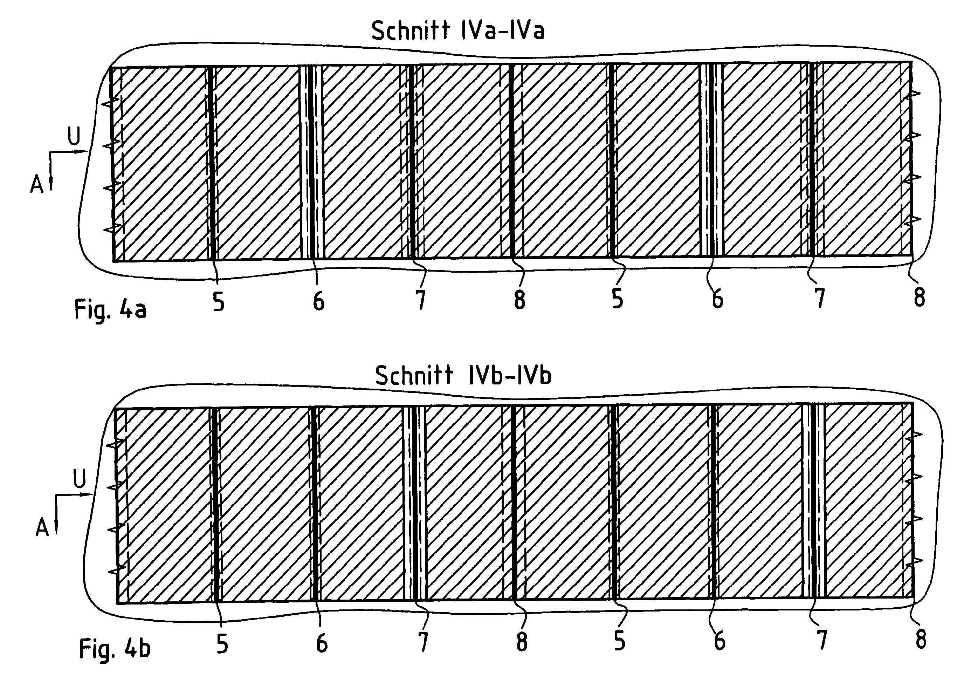

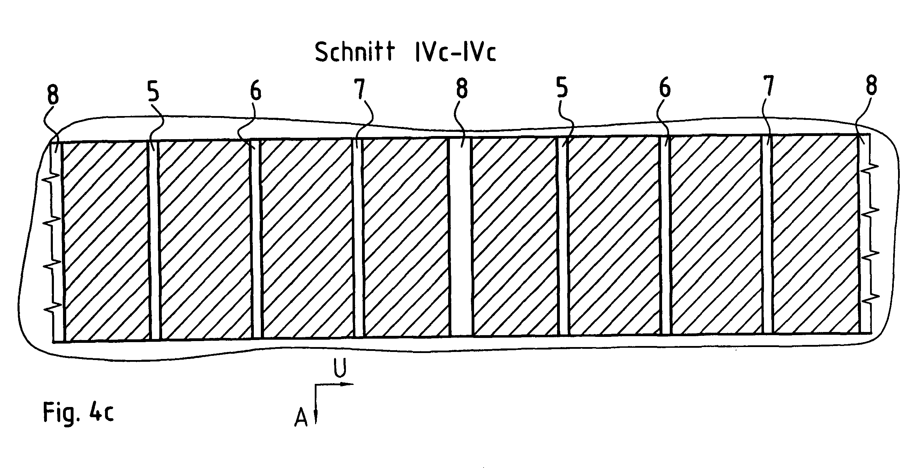

Aus den Figuren 1,2, 4a, 4b und 4c ist erkennbar, dass mit zunehmender Lebensdauer des Fahrzeugreifens und somit mit zunehmend abgefahrenem Reifenprofil das Gesamtprofilbild weitgehend erhalten bleibt. Im Neuzustand bilden die zweiten radialen Erstreckungsbereiche 10 der Einschnitte 5 jeweils eine Art Querrille und die Einschnitte 6, 7 und 8 bilden in diesem Zustand in der radial äußeren Mantelfläche des Reifens lediglich einen Feineinschnitt - wie in Fig.1 und Fig.2 zu erkennen ist. Sobald das Profil soweit abgefahren ist, dass der zweite radiale Erstreckungsbereich 10 der Einschnitte 5 abgefahren ist, ist - wie in Figur 4a zu erkennen ist - der zweite radiale Erstreckungsbereich 10 des Einschnitts 6 geöffnet und bildet eine Art Querrille, während die Einschnitte 7, 8 und 5 in der dann radial äußeren Mantelfläche lediglich einen Feineinschnitt bilden. Sobald das Profil weiter soweit abgefahren ist, dass auch der zweite radiale Erstreckungsabschnitt 10 des Einschnitts 6 abgefahren ist, bildet - wie in Figur 4b zu erkennen ist - der dann geöffnete radiale zweite Erstreckungsbereich 10 des Einschnitts 7 eine Art Querrille, während die Einschnitte 8, 5 und 6 in der dann radial äußeren Mantelfläche lediglich Feineinschnitte bilden. Sobald auch der zweite radiale Erstreckungsbereich 10 des Einschnitts 7 abgefahren ist, bildet - wie in Figur 4c zu erkennen ist - der dann geöffnete zweite radiale Erstreckungsbereich 10 des Einschnitts 8 eine Art Querrille und die Einschnitte 5, 6 und 7 bilden in der dann radial äußeren Mantelfläche Feineinschnitte. Die Bodenkontaktfläche, die Zahl der wirkenden Feineinschnitte und die Zahl der wirkenden Querrillen bleibt somit über die Lebensdauer des Reifens im Wesentlichen konstant. Die Abschlusskanäle 12 schützen die Einschnitte 5, 6 und 7 an ihrem radial inneren Erstreckungsende zusätzlich gegen Kerbwirkung.

Gerade bei ovalen oder elliptischen Querschnitten der im zweiten radialen Erstreckungsabschnitt 10 ausgebildeten Durchflusskanäle ist die Ausbildung mit den Überlappungsbereichen der Überlappungshöhe K besonders sinnvoll um über die gesamte Lebensdauer einen nahezu gleichbleibenden Öffnungsoberflächenanteil des Profiles bei gleichmäßigen Querschnittsveränderungen innerhalb eines jeweiligen Einschnitts.

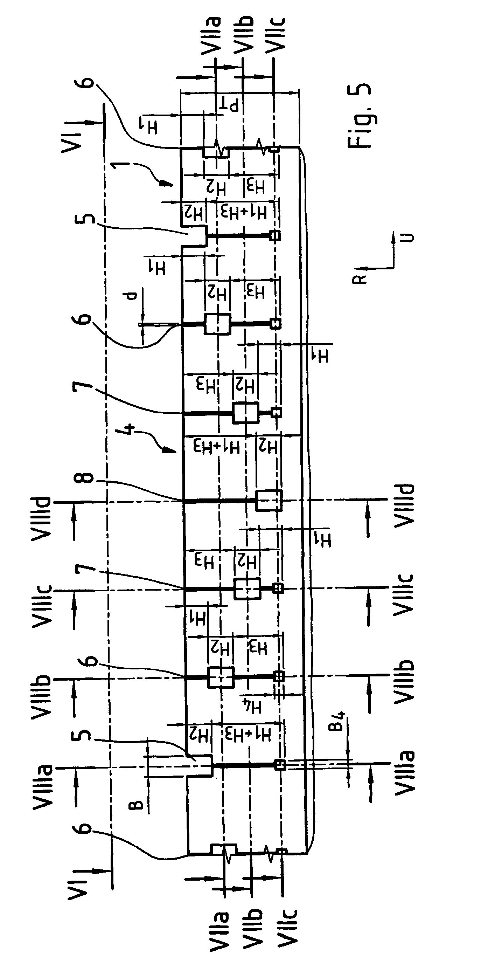

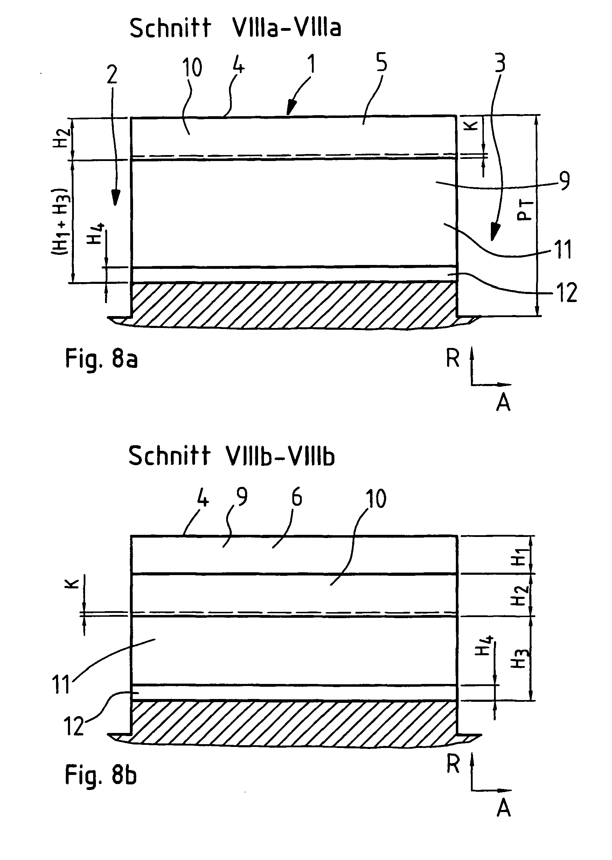

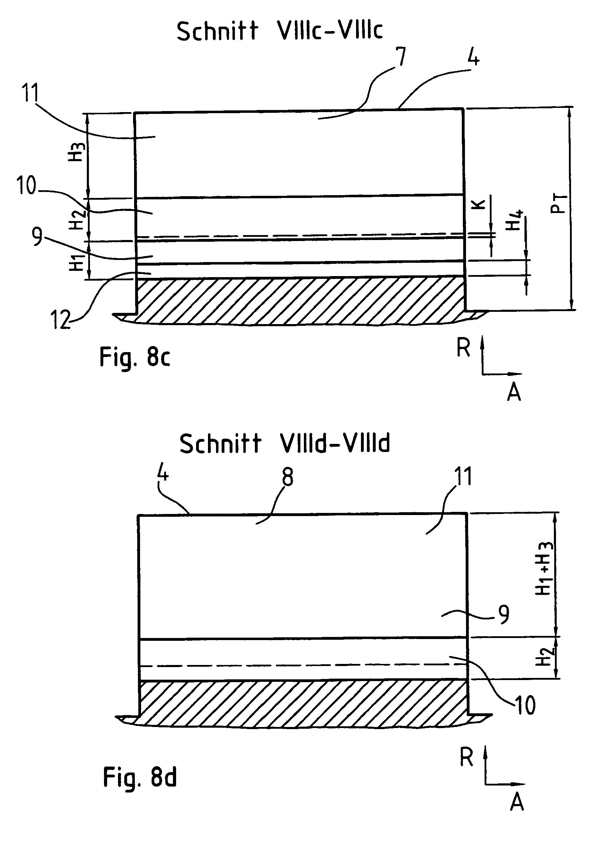

Die Figuren 5, 6, 7a bis 7c sowie 8a bis 8d zeigen ein alternatives Ausführungsbeispiel, bei dem die Umfangsrippe 1 in Umfangsrichtung U ebenfalls mit hintereinander angeordneten gleichen Abfolgen von Einschnitt 5, 6, 7 und 8 - wie im Zusammenhang mit den Figuren 1 bis 4 erläutert - ausgebildet sind. Zwischen jeweils zwei in Umfangsrichtung U hintereinander angeordneten derartigen gleichen Abfolgen mit der Abfolgeordnung Einschnitt 5, dann Einschnitt 6, dann Einschnitt 7 und dann Einschnitt 8 ist jeweils eine zusätzliche zweite Art von Abfolge von Einschnitten mit der Abfolgeordnung aus Einschnitt 7 und Einschnitt 6 ausgebildet. Diese Abfolge bewirkt, dass der zweite radiale Erstreckungsabschnitt von einem Einschnitt zum nächsten Einschnitt ausgehend vom ersten Einschnitt 5 einer Abfolge erster Art zunächst über den Einschnitt 6, den Einschnitt 7 bis zum Einschnitt 8 stufenförmig in seiner radialen Position abgesenkt und anschließend ausgehend von dem Einschnitt 8 über den anschließenden Einschnitt 7 und den nächsten Einschnitt 6 der zweiten Abfolge bis zum Folgeeinschnitt 5 der nächsten Abfolge erster Art stufenförmig jeweils in der radialen Position angehoben wird, bevor er dann wieder in dieser nächsten Abfolge erster Art der Einschnitte 5, 6, 7 und 8 in radialer Richtung nach innen abgesenkt wird.

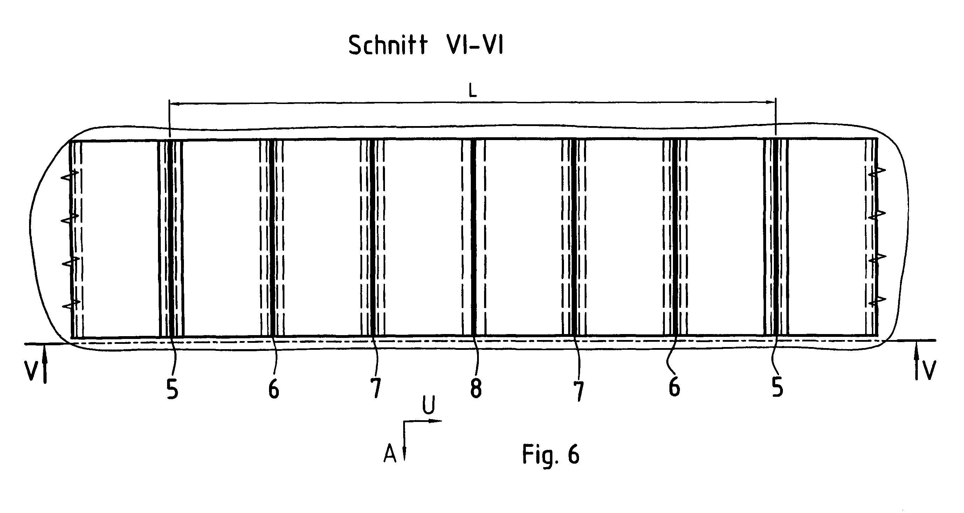

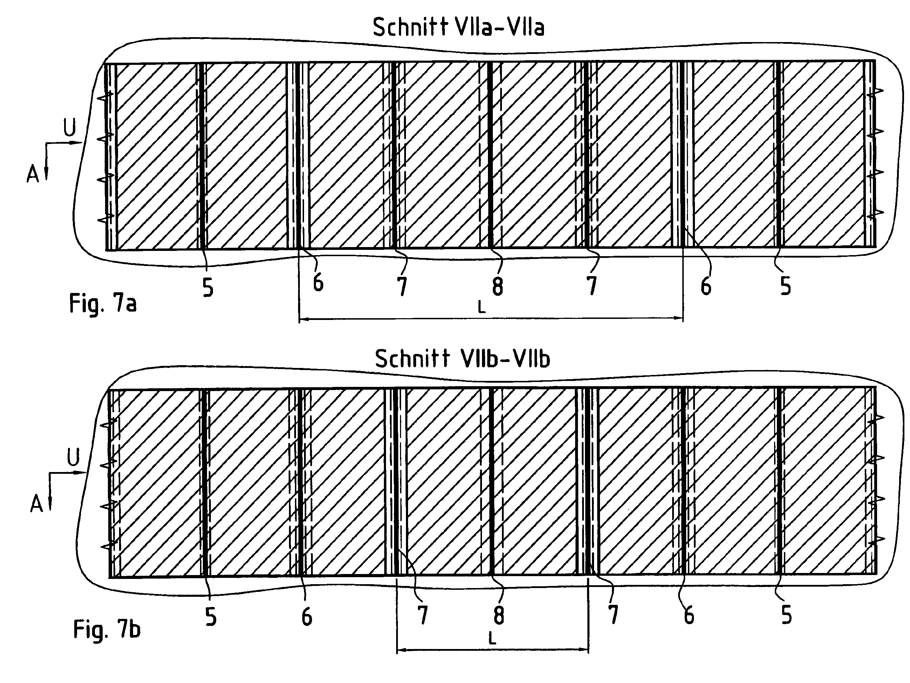

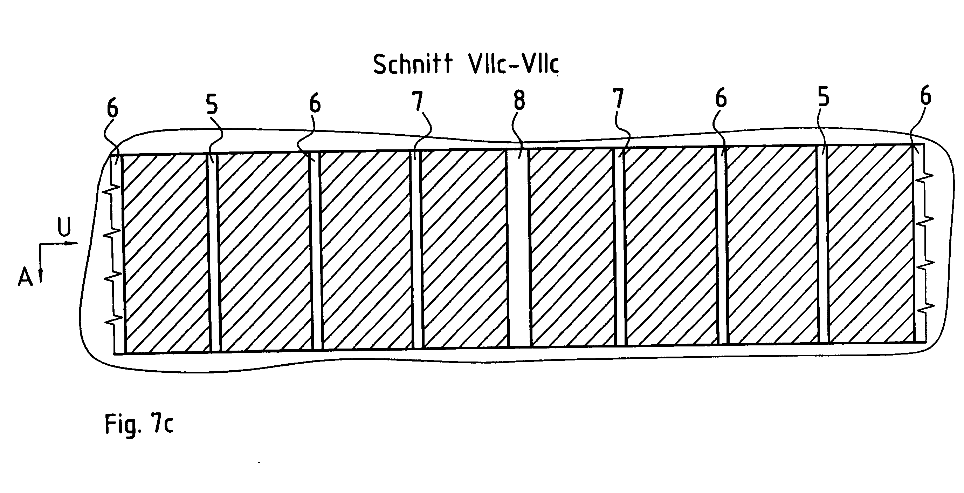

Die Einschnitte 7 und 6 sind über den Umfang des Reifens doppelt so häufig ausgebildet wie die Einschnitte 5 und 8. Wie in den Figuren 6, 7a, 7b und 7c zu erkennen ist, wird bei dieser Ausbildung über die Lebensdauer die zwischen zwei in Umfangsrichtung hintereinander angeordneten an der gerade wirkenden Mantelfläche des Reifens ausgebildeten Querrillen gemessene Umfangslänge L und die Zahl der wirkenden Umfangsrillen verändert.

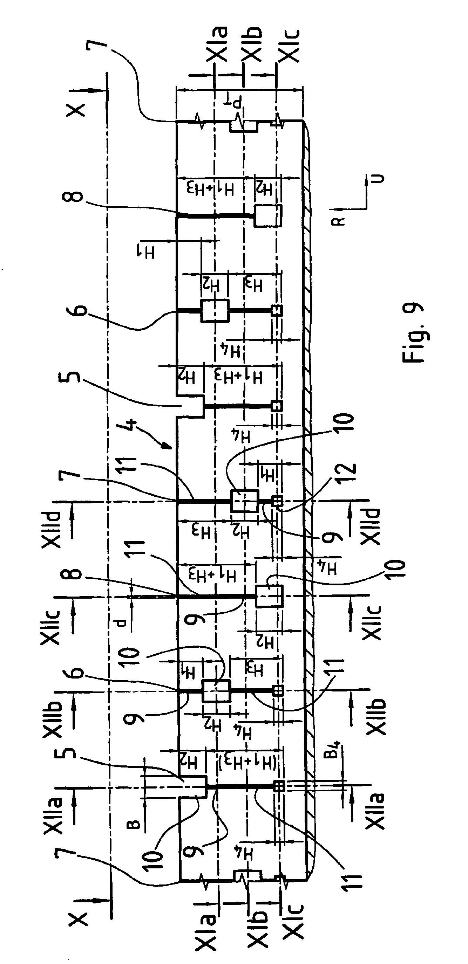

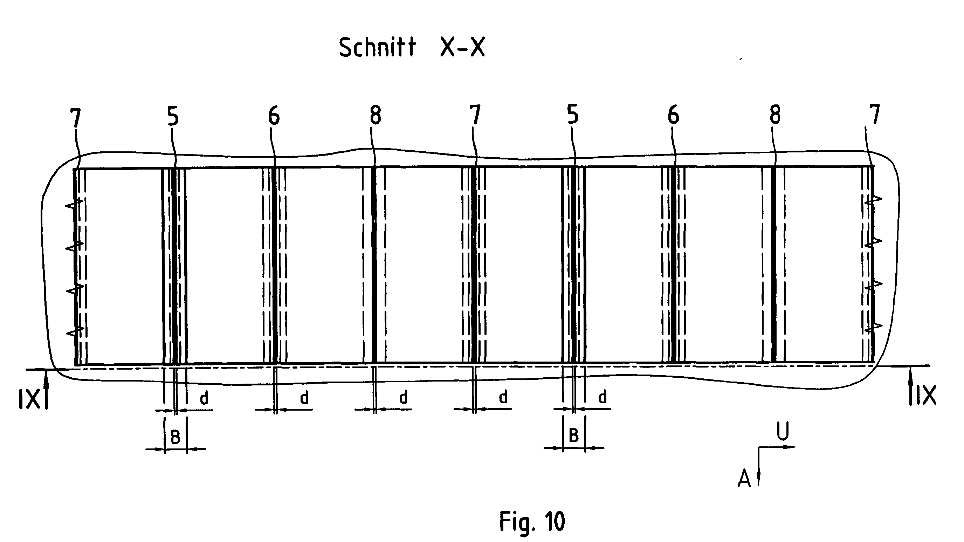

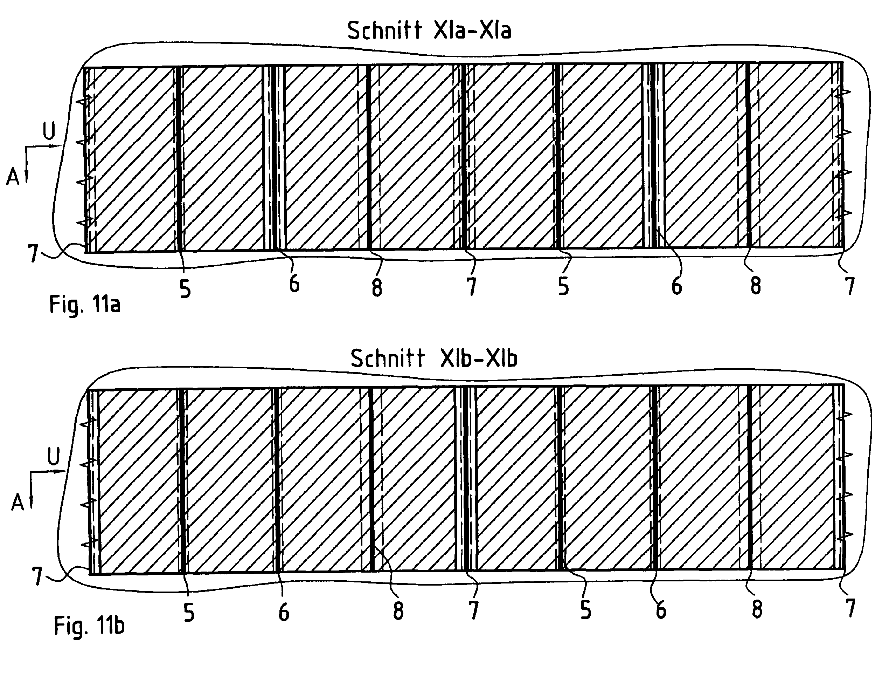

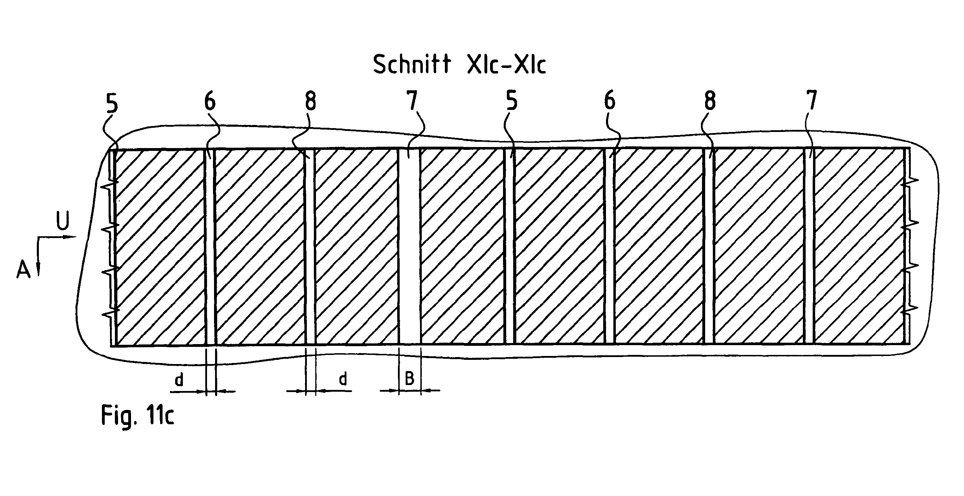

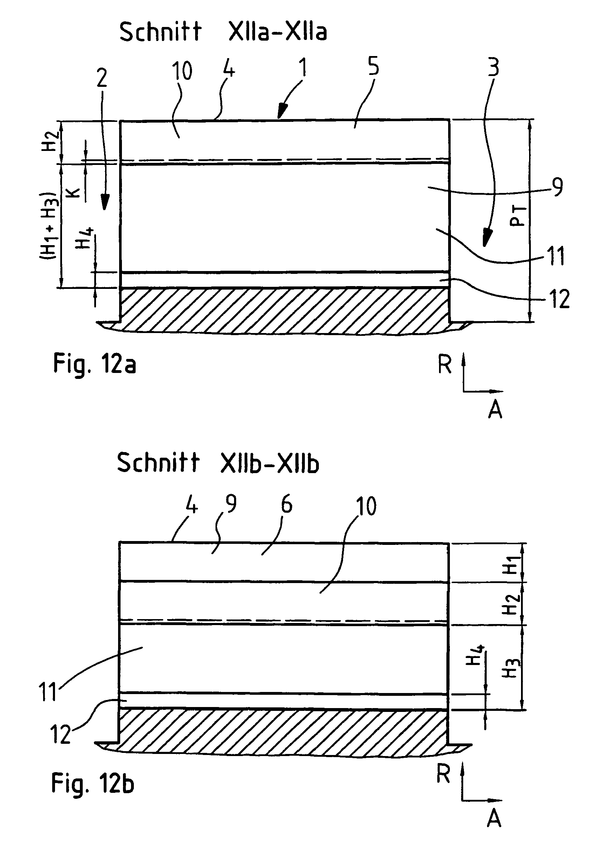

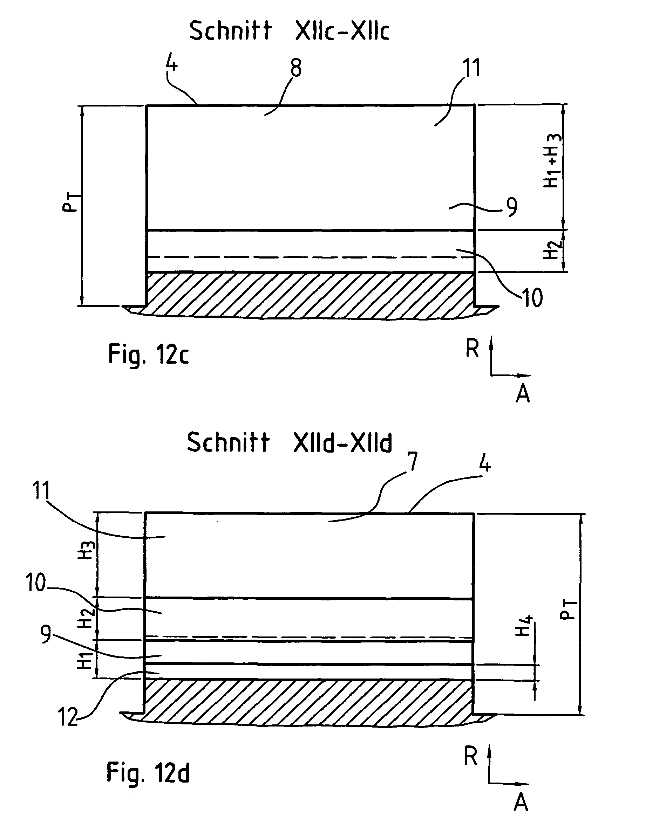

Die Figuren 9, 10, 11a bis 11c sowie 12a bis 12d zeigen eine Umfangsrippe 1, welche-wie in den Erläuterungen zu den Figuren 1 bis 4 erläutert - aus sich in Umfangsrichtung U des Fahrzeugluftreifens abwechselnden gleichen Abfolgen der Einschnitte 5, 6, 7 und 8 ausgebildet ist, wobei in den Figuren 9 bis 12 die Abfolge in der Anordnungsreihenfolge von Einschnitt 5, dann Einschnitt 6, dann Einschnitt 8 und dann Einschnitt 7 gewählt ist.

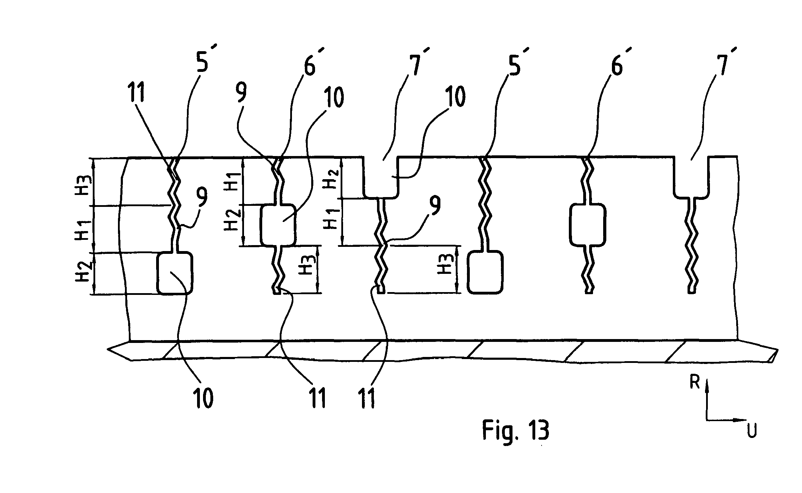

In der schematischen Darstellung von Figur 13 ist ein Ausführungsbeispiel mit Abfolgen aus lediglich drei Einschnitten 5', 6', 7' ausgebildet mit radial erstem Erstreckungsbereich 9, mit radial zweitem Erstreckungsbereich 10 und mit radial drittem Erstreckungsbereich 11, wobei in diesem Ausführungsbeispiel H₁ = H₂ = H₃ gewählt ist, und mit der über den Umfang sich immer wieder wiederholenden Abfolge mit der Abfolgeordnung Einschnitt 5', dann Einschnitt 6' und dann Einschnitt 7'.

In den Figuren 1 bis 12 sind die Einschnitte 5, 6,7 und 8 jeweils in ihren ersten Erstreckungsbereichen 9 und in ihren dritten Erstreckungsbereichen 11 in radialer Richtung R geradlinig verlaufend dargestellt.

Figur 13 zeigt ein weiteres Ausführungsbeispiel, in welchem die radial ersten Erstreckungsbereiche 9 und die radial dritten Erstreckungsbereiche 11 mit einem längs der radialen Erstreckung zickzackförmigen Verlauf ausgebildet sind.

In Figur 13 wurde zur Vereinfachung bei den Einschnitte 6' und 7' der Abschlusskanal 12 nicht eingezeichnet. Der Abschlusskanal 12 ist auch in diesem Ausführungsbeispiel - wie im Zusammenhang mit den Figuren 1 bis Fig.4 beschrieben - ausgebildet.

In einer Ausführung eines Fahrzeugluftreifens sind über den Umfang des Fahrzeugluftreifens ca. 200 Einschnitte in der Profilrippe ausgebildet.

### Bezugszeichenliste

### (Teil der Beschreibung)

- 1: Umfangsrippe
- 2: Umfangsrille
- 3: Umfangsrille
- 4: Bodenkontakt bildende Oberfläche
- 5: Einschnitt
- 6: Einschnitt
- 7: Einschnitt
- 8: Einschnitt
- 9: Erster Erstreckungsabschnitt
- 10: Zweiter Erstreckungsabschntt
- 11: Dritter Erstreckungsabschnitt
- 12: Abschlusskanal
- 13: Überlappungsabschnitt

## Patentansprüche

1. Laufstreifenprofil eines Fahrzeugluftreifens mit durch Rillen (2,3) oder Nuten axial voneinander beabstandeten und axial begrenzten radial erhabenen Profilbändern (1), die sich über den gesamten Umfang des Fahrzeugluftreifens erstrecken und in radialer Richtung R nach außen von einer die Bodenkontaktoberfläche bildenden Mantelfläche (4) des Fahrzeugluftreifens begrenzt werden, wobei wenigstens in einem Profilband (1) über den Umfang des Fahrzeugluftreifens verteilt eine Vielzahl von quer- oder schrägverlaufenden Einschnitten (5,6,7,8) ausgebildet sind, die sich in axialer Richtung A zumindest innerhalb der Bodenaufstandsbreite TA des Fahrzeugluftreifens jeweils durch das gesamte Profilband (1) hindurch und in radialer Richtung R ausgehend von der Mantelfläche (4) nach radial innen bis in eine Tiefe T erstrecken,
wobei die Einschnitte (5,6,7,8) jeweils zumindest erste radiale Erstreckungsbereiche (9) und zweite radiale Erstreckungsbereiche (10) aufweisen, wobei der Einschnitt (5,6,7,8) im ersten radialen Erstreckungsbereich (9) jeweils als Feineinschnitt mit einer Schnittdicke d und einer in radialer Richtung R gemessenen Erstreckungshöhe H₁ und im zweiten radialen Erstreckungsbereich (10) als breiter Einschnitt der Schnittdicke B mit B ≥ (2d) und einer in radialer Richtung R gemessenen Erstreckungshöhe H₂ ausgebildet ist,
**dadurch gekennzeichnet,**
**dass** die innerhalb eines Einschnitts (5,6,7,8) jeweils zueinander ausgebildete radiale Position des ersten radialen Erstreckungsbereichs (9) und des zweiten radialen Erstreckungsbereichs (10) in den über den Umfang des Reifens verteilt angeordneten Einschnitten (5,6,7,8) zumindest teilweise -insbesondere in einer alternierenden Reihenfolge - unterschiedlich gewählt ist.

2. Laufstreifenprofil gemäß den Merkmalen von Anspruch 1,
wobei die Einschnitte wenigstens zusätzlich dritte radiale Erstreckungsbereiche (11) aufweisen, in denen der Einschnitt (5,6,7,8) ebenfalls als Feineinschnitt mit der Schnittdicke d und mit einer in radialer Richtung R gemessenen Erstreckungshöhe H₃ ausgebildet ist, und
wobei die innerhalb eines Einschnitts (5,6,7,8) jeweils zueinander ausgebildete radiale Position des ersten radialen Erstreckungsbereichs (9), die radiale Position des zweiten radialen Erstreckungsbereichs (10) und die radiale Position des dritten Erstreckungsbereichs (11) in den über den Umfang des Reifens verteilt angeordneten Einschnitten (5,6,7,8) zumindest teilweise -insbesondere in einer alternierenden Reihenfolge - unterschiedlich gewählt ist.

3. Laufstreifenprofil gemäß den Merkmalen von Anspruch 2,
wobei die Erstreckungshöhe des dritten radialen Erstreckungsbereiches (11) und die Erstreckungshöhe des ersten radialen Erstreckungsbereiches (9) mit H₃ = H₁ ausgebildet ist.

4. Laufstreifenprofil gemäß den Merkmalen von Anspruch 2,
wobei die Erstreckungshöhe des dritten radialen Erstreckungsbereiches (11) und die Erstreckungshöhe des ersten radialen Erstreckungsbereiches (9) mit H₃ > H₁ ausgebildet ist.

5. Laufstreifenprofil gemäß den Merkmalen von Anspruch 2,
wobei in Umfangsrichtung U des Fahrzeugreifens jeweils von Einschnitt (5,6,7,8) zu Einschnitt sich die radiale Position des zweiten radiale Erstreckungsbereiches gegenüber dem vorangegangenen Einschnitt ändert.

6. Laufstreifenprofil gemäß den Merkmalen von Anspruch 5,
wobei in einer sich über den Umfang des Fahrzeugluftreifens wiederholenden Abfolge von in Umfangsrichtung U hintereinander angeordneten Einschnitten (5,6,7,8) von Einschnitt zu Einschnitt der zweite radiale Erstreckungsbereich (10) in allen radialen Positionen des zweiten Erstreckungsbereiches (10) einmal ausgebildet ist.

7. Laufstreifenprofil gemäß den Merkmalen von Anspruch 6,
wobei innerhalb der sich über den Umfang des Fahrzeugluftreifens wiederholenden Abfolge von in Umfangsrichtung U hintereinander angeordneten Einschnitten (5,6,7,8) der zweiten Erstreckungsbereich (10) von Einschnitt zu Einschnitt jeweils in die von radial innen nach radial außen nächstgelegene radial äußeren Position des zweiten Erstreckungsbereiches (10) verändert ausgebildet ist.

8. Laufstreifenprofil gemäß den Merkmalen von Anspruch 6 oder 7,
wobei über den Umfang des Fahrzeugluftreifens die Abfolgen der Einschnitte (5,6,7,8) unmittelbar hintereinander anschließen.

9. Laufstreifenprofil gemäß den Merkmalen von Anspruch 7,
wobei zwischen zwei in Umfangsrichtung U hintereinander angeordneten derartigen Abfolgen eine zweite Abfolge von Einschnitten (7,6) angeordnet ist, innerhalb der der zweite radiale Erstreckungsbereich (10) jeweils von Einschnitt zu Einschnitt in die von radial außen nach radial innen nächstgelegene radial innere Position des zweiten Erstreckungsbereiches (10) verändert ausgebildet ist.

10. Laufstreifenprofil gemäß den Merkmalen von einem der vorangegangenen Ansprüche,
wobei die zweiten Erstreckungsbereiche (10) mit einer senkrecht zu ihrer Erstreckungsrichtung im Wesentlichen ovaler, elliptischer oder rechteckig abgerundeter Querschnittskontur ausgebildet sind.

11. Laufstreifenprofil gemäß den Merkmalen von einem der vorangegangenen Ansprüche,
wobei die Erstreckungshöhe H₂ des zweiten Erstreckungsbereiches (10) mit B≤ H₂≤(0,5P_{T}) ausgebildet, wobei P_{T} die in der das Profilband (1) in axialer Richtung A begrenzenden Rillen (2,3) in radialer Richtung R ausgehend von der Mantelfläche (4) nach radial innen gemessene maximale Profiltiefe angibt.

12. Laufstreifenprofil gemäß den Merkmalen von einem der vorangegangenen Ansprüche,
wobei die Schnittdicke d des Feineinschnitts (9,11) mit 0,4mm ≤ d < 2mm ausgebildet ist.

13. Laufstreifenprofil gemäß den Merkmalen von einem der vorangegangenen Ansprüche,
wobei jeweils an den Einschnitten (5,6,7), in denen ein erster (9) bzw. ein dritter (11) radialer Erstreckungsbereich des Einschnitts (5,6,7) in radialer Position unterhalb des zweiten radialen Erstreckungsbereichs (10) des Einschnitts (5,6,7) ausgebildet ist, der Einschnitt (5,6,7) an seinem radial inneren Erstreckungsende mit einer kanalförmigen Öffnung (12) -mit insbesondere ovalem oder elliptischem Querschnitt -, die sich längs der Erstreckung des Einschnitts (5,6,7) in axialer Richtung A zumindest innerhalb der Bodenaufstandsbreite TA des Fahrzeugluftreifens durch das gesamte Profilband (1) hindurch erstreckt und deren Querschnitt eine in radialer Richtung gemessene Querschnittshöhe H₄ und eine Kanalbreite B₄ aufweist mit B₄ ≤ H₄< (0,5 H₂) und mit d≤ B₄≤(0,5B).

## Claims

1. Tread profile of a pneumatic vehicle tyre with radially raised profile strips (1) which are axially spaced apart from one another and axially delimited by grooves (2, 3) or recesses, extend over the entire circumference of the pneumatic vehicle tyre and are delimited outwardly in the radial direction R by a lateral surface (4) of the pneumatic vehicle tyre forming the ground contact surface, a multiplicity of transversely or obliquely running slits (5, 6, 7, 8) being formed at least in one profile strip (1) such that they are distributed over the circumference of the pneumatic vehicle tyre and extend in the axial direction A in each case through the entire profile strip (1), at least within the ground contact width TA of the pneumatic vehicle tyre, and in the radial direction R from the lateral surface (4) radially inwards to a depth T,
wherein the slits (5, 6, 7, 8) respectively have at least first radial regions of extent (9) and second radial regions of extent (10),
wherein the slit (5, 6, 7, 8) is formed in the first radial region of extent (9) respectively as a fine slit with a thickness of cut d and a height of extent H₁, measured in the radial direction R, and are formed in the second radial region of extent (10) as a wide slit with a thickness of cut B, with B ≥ (2d), and a height of extent H₂, measured in the radial direction R,
**characterized**
**in that** the radial position of the first radial region of extent (9) and of the second radial region of extent (10), respectively formed in relation to one another within a slit (5, 6, 7, 8), is at least partly chosen differently - in particular in an alternating sequence - in the slits (5, 6, 7, 8) arranged distributed over the circumference of the tyre.

2. Tread profile according to the features of Claim 1, wherein the slits have at least in addition third radial regions of extent (11), in which the slit (5, 6, 7, 8) is likewise formed as a fine slit with the thickness of cut d and with a height of extent H₃, measured in the radial direction R, and wherein the radial position of the first radial region of extent (9), the radial position of the second radial region of extent (10) and the radial position of the third radial region of extent (11), respectively formed in relation to one another within a slit (5, 6, 7, 8), are at least partly chosen differently - in particular in an alternating sequence - in the slits (5, 6, 7, 8) arranged distributed over the circumference of the tyre.

3. Tread profile according to the features of Claim 2, wherein the height of extent of the third radial region of extent (11) and the height of extent of the first radial region of extent (9) are formed with H₃ = H₁.

4. Tread profile according to the features of Claim 2, wherein the height of extent of the third radial region of extent (11) and the height of extent of the first radial region of extent (9) are formed with H₃ > H₁.

5. Tread profile according to the features of Claim 2, wherein the radial position of the second radial region of extent respectively changes in comparison with the preceding slit from slit (5, 6, 7, 8) to slit in the circumferential direction U of the vehicle tyre.

6. Tread profile according to the features of Claim 5, wherein, in a series that is repeated over the circumference of the pneumatic vehicle tyre of slits (5, 6, 7, 8) arranged one behind the other in the circumferential direction U, from slit to slit the second radial region of extent (10) is formed once in all radial positions of the second region of extent (10).

7. Tread profile according to the features of Claim 6, wherein, within the series that is repeated over the circumference of the pneumatic vehicle tyre of slits (5, 6, 7, 8) arranged one behind the other in the circumferential direction U, the second radial region of extent (10) is formed as respectively changed from slit to slit to the next radially outer position of the second region of extent (10) from radially inside to radially outside.

8. Tread profile according to the features of Claim 6 or 7,
wherein the series of slits (5, 6, 7, 8) follow on directly one after the other over the circumference of the pneumatic vehicle tyre.

9. Tread profile according to the features of Claim 7, wherein a second series of slits (7, 6), within which the second radial region of extent (10) is formed as respectively changed from slit to slit to the next radially inner position of the second region of extent (10) from radially outside to radially inside, is arranged between two such series arranged one behind the other in the circumferential direction U.

10. Tread profile according to the features of one of the preceding claims,
wherein the second regions of extent (10) are formed with a substantially oval, elliptical or rectangularly rounded cross-sectional contour perpendicularly to their direction of extent.

11. Tread profile according to the features of one of the preceding claims,
wherein the height of extent H₂ of the second region of extent (10) is formed with B ≤ H₂ ≤ (0.5P_{T}),
where P_{T} is the maximum profile depth, measured from the lateral surface (4) radially inwards in the radial direction R in the grooves (2, 3) delimiting the profile strip (1) in the axial direction A.

12. Tread profile according to the features of one of the preceding claims,
wherein the thickness of cut d of the fine slit (9, 11) is formed with 0.4 mm ≤ d ≤ 2 mm.

13. Tread profile according to the features of one of the preceding claims,
wherein, at the slits (5, 6, 7), in which a first (9) or a third (11) radial region of extent of the slit (5, 6, 7) is respectively formed underneath the second radial region of extent (10) of the slit (5, 6, 7) in the radial position, the slit (5, 6, 7) extends at the radially inner end of its extent with a channel-shaped opening (12) - in particular of an oval or elliptical cross section - , which extends through the entire profile strip (1) along the extent of the slit (5, 6, 7) in the axial direction A, at least within the ground contact width TA of the pneumatic vehicle tyre, and the cross section of which has a cross-sectional height H₄, measured in the radial direction, and a channel width B₄, with B₄ ≤ H₄ < (0.5 H₂) and with d ≤ B₄ < (0.5 B).

## Revendications

1. Profil de bande de roulement pour bandage pneumatique pour roue de véhicule, présentant des bandes profilées (1) maintenues à distance mutuelle dans la direction axiale par des sillons (2, 3) ou des rainures et présentant un relief radial délimité axialement, s'étendant sur toute la périphérie du bandage pneumatique pour roue de véhicule et délimitées vers l'extérieur dans la direction radiale R par la surface d'enveloppe (4) qui forme la surface de contact du bandage pneumatique pour roue de véhicule avec le sol,
plusieurs entailles (5, 6, 7, 8) s'étendant transversalement ou obliquement étant réparties dans au moins une bande profilée (1) sur toute la périphérique du bandage pneumatique pour roue de véhicule et s'étendant sur toute la bande profilée (1) au moins à l'intérieur de la largeur TA d'appui au sol du bandage pneumatique pour roue de véhicule dans la direction axiale A, et vers l'intérieur sur une profondeur T dans la direction radiale R en partant de la surface d'enveloppe (4),
les entailles (5, 6, 7, 8) présentant toutes au moins des premières parties (9) d'extension radiale et des deuxièmes parties (10) d'extension radiale,
chaque entaille (5, 6, 7, 8) étant configurée dans la première partie (9) d'extension radiale comme fine entaille présentant une épaisseur d'entaille d et une hauteur d'extension H₁, mesurée dans la direction radiale R, et dans la deuxième partie (10) d'extension radiale comme large entaille présentant une épaisseur d'entaille B avec B ≥ (2d) et une hauteur d'extension H₂ mesurée dans la direction radiale R,
**caractérisé en ce que**
la position radiale de la première partie (9) d'extension radiale à l'intérieur d'une entaille (5, 6, 7, 8) et celle de la deuxième partie (10) d'extension radiale dans les entailles (5, 6, 7, 8) réparties à la périphérie du bandage de roue sont, au moins pour certaines et en particulier en succession alternée, sélectionnées différemment.

2. Profil de bande de roulement selon les caractéristiques de la revendication 1, dans lequel les entailles présentent au moins des troisièmes parties (11) supplémentaires d'extension radiale dans lesquelles l'entaille (5, 6, 7, 8) est également configurée comme fine entaille présentant une épaisseur d'entaille d et une hauteur H₃ d'extension mesurée dans la direction radiale R et dans lequel la position radiale de la première partie (9) d'extension radiale à l'intérieur d'une entaille (5, 6, 7, 8), celle de la deuxième partie (10) d'extension radiale dans les entailles (5, 6, 7, 8) réparties à la périphérie du bandage de roue et celle de la troisième partie (11) d'extension radiale sont, au moins pour certaines et en particulier en succession alternée, sélectionnées différemment.

3. Profil de bande de roulement selon les caractéristiques de la revendication 2, dans lequel la hauteur d'extension de la troisième partie (11) d'extension radiale et la hauteur d'extension de la première partie (9) d'extension radiale sont configurées de telle sorte que H₃ = H₁.

4. Profil de bande de roulement selon les caractéristiques de la revendication 2, dans lequel la hauteur d'extension de la troisième partie (11) d'extension radiale et la hauteur d'extension de la première partie (9) d'extension radiale sont configurées de telle sorte que H3 > H₁.

5. Profil de bande de roulement selon les caractéristiques de la revendication 2, dans lequel d'une entaille (5, 6, 7, 8) à une autre, la position radiale de la deuxième partie d'extension radiale est différente de celle de l'entaille précédente dans la direction périphérique U du bandage pour roue de véhicule.

6. Profil de bande de roulement selon les caractéristiques de la revendication 5, dans lequel dans une succession, répétée sur la périphérie de bandage pneumatique pour roue de véhicule, d'entailles (5, 6, 7, 8) disposées les unes à la suite des autres dans la direction périphérique U, la deuxième partie (10) d'extension radiale est formée une fois d'une entaille à l'autre dans toutes les positions radiales de la deuxième partie (10) d'extension radiale.

7. Profil de bande de roulement selon les caractéristiques de la revendication 6, dans lequel à l'intérieur de la succession, répétée sur la périphérie de bandage pneumatique pour roue de véhicule, d'entailles (5, 6, 7, 8) disposées les unes à la suite des autres dans la direction périphérique U, la deuxième partie (10) d'extension radiale est configurée différemment d'une entaille à l'autre dans la position radiale extérieure de la deuxième partie (10) d'extension radiale qui suit immédiatement dans la direction radiale allant de l'intérieur vers l'extérieur.

8. Profil de bande de roulement selon les caractéristiques des revendications 6 ou 7, dans lequel les successions des entailles (5, 6, 7, 8) se raccordent immédiatement les unes aux autres sur la périphérie du bandage pneumatique pour roue de véhicule.

9. Profil de bande de roulement selon les caractéristiques de la revendication 7, dans lequel une deuxième succession d'entailles (7, 6) à l'intérieur de laquelle la deuxième partie (10) d'extension radiale est configurée différemment d'une entaille à l'autre dans la position radialement intérieure de la deuxième partie d'extension (10) qui suit immédiatement dans la direction radiale allant de l'extérieur vers l'intérieur, est disposée entre deux de ces successions disposées à la suite l'une de l'autre dans la direction périphérique U.

10. Profil de bande de roulement selon les caractéristiques d'une des revendications précédentes, dans lequel les deuxièmes parties d'extension (10) sont configurées avec une section transversale perpendiculaire à la direction d'extension de contour essentiellement ovale, elliptique ou en rectangle à coins arrondis.

11. Profil de bande de roulement selon les caractéristiques d'une des revendications précédentes, dans lequel la hauteur H₂ d'extension de la deuxième partie (10) d'extension est configurée avec B ≤ H₂ ≤ (0,5 P_{T}), P_{T} représentant la profondeur maximale du profil, mesurée radialement vers l'intérieur dans la direction radiale R à partir de la surface d'enveloppe (4), dans les sillons (2, 3) qui délimitent la bande profilée (1) dans la direction axiale A.

12. Profil de bande de roulement selon les caractéristiques d'une des revendications précédentes, dans lequel l'épaisseur d de la fine entaille (9, 11) est configurée avec 0,4 mm ≤ d ≤ 2 mm.

13. Profil de bande de roulement selon les caractéristiques d'une des revendications précédentes, dans lequel sur chacune des entailles (5, 6, 7) dans lesquelles une première partie d'extension radiale (9) ou une troisième partie d'extension radiale (11) de l'entaille (5, 6, 7) est formée en position radiale en dessous de la deuxième partie d'extension radiale (10) de l'entaille (5, 6, 7), l'entaille (5, 6, 7) se prolonge à son extrémité d'extension radialement intérieure par une ouverture (12) en forme de canal, de section transversale en particulier ovale ou elliptique, qui s'étend le long de l'extension de l'entaille (5, 6, 7) dans la direction axiale A au moins à l'intérieur de la largeur TA d'appui au sol du bandage pneumatique pour roue de véhicule, à travers la totalité de la bande profilée (1), la section transversale présentant une hauteur H₄ mesurée dans la direction radiale et une largeur B₄ de canal, avec B₄ ≤ H₄ < (0, 5 H₂) et d ≤ B₄ < (0, 5 B).
